# EUROPEAN PATENT APPLICATION

(11) **EP 3 432 227 A1**
(43) Date of publication of application: **23.01.2019**
(21) Application number: 17766614.6
(22) Date of filing: 13.03.2017
(51) Int. Cl.: G06N 99/00

(54) **LEARNING SERVICE PROVISION DEVICE**

(30) Priority: 14.03.2016 JP 2016049236
(71) Applicant: Omron Corporation, Kyoto-shi, Kyoto 600-8530 (JP)
(72) Inventor: ANDO, Tanichi, Komaki-shi Aichi 485-0802 (JP)
(74) Representative: Horn Kleimann Waitzhofer Patentanwälte PartG mbB
(86) International application number: PCT/JP2017/009984
(87) International publication number: WO 2017/159614

(57) **Abstract**

Provided is a mechanism for improving the efficiency of development operations for adding a new ability to an apparatus. Also, a mechanism is provided with which even a person who does not have a knowledge and a system relating to machine learning can easily add a new ability acquired by machine learning to his/her apparatus. A request acceptance unit accepts, as learning request information, information necessary for performing machine learning with respect to an ability to be added to a target apparatus, from a requester. A learning simulator performs machine learning according to the learning request information accepted from the requester. An ability providing data generation unit generates, based on a learning result obtained by the learning simulator, ability providing data, which is data for adding a new ability acquired as the learning result to the target apparatus. A service providing unit provides the ability providing data to the requester.

## Description

### CROSS-REFERENCES TO RELATED APPLICATIONS

This application claims priority to Japanese Patent Application No. 2016-049236 filed on March 14, 2016, the entire contents of which are incorporated herein by reference.

### TECHNICAL FIELD

The present invention relates to a mechanism for improving the efficiency of development operations in which machine learning is used.

### RELATED ART

Heretofore, artificial intelligence and neural networks have been widely studied. For example, object recognition technology using images has advanced in many ways, and the recognition rate has been increasing gradually. With a new learning method called "deep learning", the object recognition rate is rapidly increasing in recent years, and the recognition rate regarding image classification has reached a level that exceeds the recognition rate of humans. Deep learning is applicable to a wide variety of fields including not only image recognition, but also voice recognition, personal authentication, behavior prediction, text summarization, machine translation, monitoring, autonomous driving, fault prediction, sensor data analysis, music genre determination, contents creation, security systems, and the like. Machine learning such as deep learning enables machines to acquire new abilities, without humans being involved.

At present, machine learning technology such as deep learning is a special technology. A person having a special skill needs to perform research and development in order to apply AI technology to a specific field. For example, for each request from a client, a person who has knowledge of AI technology performs system development in which a client's apparatus and needs are analyzed, a learning plan is created, a training system is constructed, a trained neural network is generated, and the generated trained neural network is incorporated into the client's system. In machine learning such as deep learning, large volumes of data are usually required, and the number of repetitive computations is large, and therefore a large-scale training system is required. A more complicated system that is different from conventional web applications is used as the training system in which not only AI technology is implemented, but also an architecture for handling large volumes of data is implemented, parallel operations are introduced, and computation programs are implemented by hardware. In the current situation, AI technology service companies that have AI technology perform both consulting and system development for client companies that do not have deep knowledge of AI technology.

As a technology relating to implementing a new ability to an apparatus, a technology in which the firmware of a printer is re-written is disclosed in Patent Documents 1 and 2. Also, a technology relating to machine learning is disclosed in Patent Documents 3 and 4, and a character identification system using deep learning is disclosed in Document 5.

### RELATED ART DOCUMENT

### PATENT DOCUMENTS

Patent Document 1: JP 2009-134474A
Patent Document 2: JP 2007-140952A
Patent Document 3: JP 2014-228972A
Patent Document 4: JP 5816771B
Patent Document 5: JP 2015-53008A

### SUMMARY OF THE INVENTION

In future, it is expected that a need will increase that a company that develops an apparatus desires to develop by itself a product in which AI technology is incorporated. Specifically, such a demand is high in an embedded device. However, in order to perform machine learning (training), an advanced system and a person that can perform maintenance on the advanced system are required. Accordingly, it is not easy for an engineer of a general manufacturer to perform the machine learning by him/herself.

The present invention has been made in view of the foregoing problem, and aims to provide a mechanism for allowing a person who does not have any knowledge or system relating to machine learning easily to add a new ability to his/her apparatus.

### MEANS FOR SOLVING THE PROBLEMS

To achieve at least one of the above-stated objects, the present invention adopts the following configuration.

One aspect of the present invention relates to a learning service providing apparatus including: a request acceptance unit configured to accept information necessary for performing machine learning with respect to an ability to be added to a target apparatus, from a requester, as learning request information; a learning simulator configured to perform machine learning according to the learning request information accepted from the requester; an ability providing data generation unit configured to generate, based on a learning result obtained by the learning simulator, ability providing data, which is data for adding a new ability acquired as the learning result to the target apparatus; and a service providing unit configured to provide the ability providing data to the requester.

Benefits to a developer (requester) of the target apparatus are as follows. First, when this learning service providing apparatus is used, the requester need not to perform the machine learning by him/herself, and therefore the efficiency of development operations for adding a new ability to the target apparatus can be improved. Also, the requester need only provide information necessary for the machine learning, and therefore even a person who does not have any knowledge or system relating to the machine learning can easily use the learning service providing apparatus. Also, since the learning result is provided in a form of the ability providing data (data for adding a new ability to the target apparatus), the requester can easily add the new ability acquired by the machine learning to his/her apparatus.

Meanwhile, the benefits to a person (service provider) who performs the machine learning are as follows. Since the information necessary for performing the machine learning is provided from a requester, it is ensured that the machine learning is executed as requested. Also, processing such as accepting a request from the requester and performing the machine learning can be largely automated while minimizing labor. Furthermore, since the learning result is converted to the ability providing data, and the ability providing data is provided to the requester, processing for providing and implementing the learning result to the target apparatus can be automated while minimizing labor.

The target apparatus may include an architecture for incorporating a new ability to the target apparatus, and the learning simulator may perform the machine learning such that an ability that is compatible with the architecture included in the target apparatus is acquired. As a result of the target apparatus having such an architecture, a new ability can be easily incorporated. Also, as a result of the learning simulator performing the machine learning so as to be compatible with the architecture of the target apparatus, an ability that has been acquired as the result of the machine learning can be easily incorporated into the target apparatus.

The architecture may be an architecture that is modeled by an ability acquisition model including an ability unit that executes an ability, a data input unit that is an input interface of the ability unit, and a data output unit that is an output interface of the ability unit, and the learning simulator may perform the machine learning using an ability acquisition model that is consistent with an ability acquisition model of the target apparatus. As a result of the ability acquisition models of the target apparatus and the learning simulator being made consistent with each other, it is ensured that the ability unit of the target apparatus and the ability unit of the learning simulator can execute an equivalent ability, and equivalent data can be input to or output from each of the ability units. Also, the ability acquired by the learning simulator can be easily incorporated into the target apparatus. Here, the ability providing data may be data for setting functions to the ability unit, the data input unit, and the data output unit in the ability acquisition model of the target apparatus. A learning acceptance unit may accept information for specifying the ability acquisition model of the target apparatus from the requester.

The learning simulator may simulate operations of the target apparatus, in a process of the machine learning. Here, the learning simulator may simulate operations of the target apparatus using a target apparatus model, which is a model of the target apparatus, in a process of the machine learning. Also, the learning simulator may simulate operations of the target apparatus further using a target model, which is a model of a target to which the target apparatus is related, in a process of the machine learning. As a result of using the target apparatus model and the target model, machine learning in which the behavior and influence of the target apparatus, the target, and the like are taken into consideration can be performed, even without a real machine of the target apparatus. If the real machine of the target apparatus is not required, the execution of the machine learning can be easily realized. Specifically, in the case of a large apparatus or an apparatus in operation such as a production facility, it is not realistic to use a real machine in the machine learning. The learning service of the present invention can be used even in such a case, and is superior in the freedom in application and user-friendliness. The learning acceptance unit may accept information for specifying the target apparatus or the target apparatus model, from the requester. Also, the learning acceptance unit may accept information for specifying the target or the target model.

A training information database may be further included that stores, in advance, training information in which information necessary for performing machine learning is described, for each type of machine learning with respect to which a request can be accepted. The request acceptance unit may make the requester designate the type of machine learning to be requested, and generate the learning request information using the training information corresponding to the designated type of machine learning. According to this configuration, a developer of an apparatus (requester) can easily make a request of learning an ability that is desired to be added to his/her apparatus, to a person who performs machine learning (service provider). Also, there is a benefit to the service provider that full information necessary for performing the machine learning can be acquired.

Some items of the training information may be parametric items that are defined by parameters, and the request acceptance unit may request the requester to input information with respect to the parametric items. As a result of providing parameters that can be designated by a requester, the machine learning according to the desire of the requester can be performed. Note that there is a demerit in that, if the number of items that the requester needs to input increases, the request procedure becomes complicated. Therefore, the parametric items may be limited to some items of the training information.

The request acceptance unit may display a plurality of options for each parametric item to the requester, and allow the requester to select information to be input from the plurality of options. With this, the burden on the requester when performing input is reduced.

The service providing unit may provide the ability providing data to the requester using an electronic means. The electronic means may be e-mail, FTP, download from a file server, or the like. As a result of using such an electronic means, processing for providing the ability providing data can be automated while minimizing labor.

The ability providing data may include data to be incorporated into a circuit included in the target apparatus (data to be written into an FPGA included in the target apparatus, for example), a program to be executed by a processor included in the target apparatus, and the like. As a result of providing the ability providing data in such a format, the requester can easily add the ability providing data to the target apparatus.

Note that the present invention is regarded as a learning service providing apparatus that includes at least a portion of the above-described configurations or functions. The learning service providing apparatus may be constituted by a single apparatus or configured by combining a plurality of apparatuses. Also, the present invention can be regarded as a learning service providing method including at least a portion of the above-described processing, a program for causing a computer to execute the method, or a computer-readable recording medium on which such a program is recorded in a non-transitory manner. The present invention can be constituted by combining the above configurations and various processing as long as technical inconsistencies do not occur.

### EFFECTS OF THE INVENTION

According to the present invention, a mechanism for improving the efficiency of development operations for making an apparatus acquire a new ability can be provided. Also, according to the present invention, a mechanism can be provided with which even a person who does not have a knowledge and a system relating to machine learning can easily implement a new ability acquired by the machine learning to his/her apparatus. Also, according to the present invention, a mechanism can be provided with which a developer of an apparatus (requester) can easily make a request for learning an ability that the requester desires his/her apparatus to acquire, to a person who performs machine learning (service provider). Also, according to the present invention, a mechanism can be provided with which processing to be performed by a person who performs machine learning (service provider) when accepting a request from a developer of an apparatus (requester), performing the machine learning, and providing a learning result to the requester can be automated while minimizing labor.

### BRIEF DESCRIPTION OF THE DRAWINGS

FIG. 1 is a conceptual diagram of a learning service provided by a learning service providing system.
FIG. 2 is a system configuration diagram of the learning service providing system.
FIG. 3 is a diagram illustrating a configuration of a service management unit.
FIG. 4 is a diagram illustrating an example of data registered in a training information DB.
FIG. 5 is a diagram illustrating a configuration of an ability acquisition model.
FIG. 6 is a diagram illustrating an example of a model of acquiring an ability by deep learning.
FIG. 7 is a diagram illustrating an example of a data structure of training information and training acceptance information.
FIG. 8 is a diagram illustrating a configuration of a request acceptance unit.
FIG. 9 is a diagram illustrating a configuration of a target apparatus.
FIG. 10 is a detailed diagram illustrating a configuration of a learning instruction unit and a learning simulator.
FIG. 11 is a diagram illustrating an exemplary configuration of the learning simulator.
FIG. 12 shows a processing flow of the learning service providing system.
FIG. 13 is a diagram illustrating a data structure of learning request information.
FIGS. 14A to 14D are diagrams illustrating an example of a request input screen.
FIGS. 15A to 15D are diagrams illustrating an example of the request input screen.
FIGS. 16A to 16D are diagrams illustrating an example of the request input screen.

### EMDODIMENTS OF THE INVENTION

The present invention relates to a learning service providing apparatus that can improve the efficiency of development operations for adding a new "ability" to an apparatus. In the embodiments described below, a "learning service providing system", which is a preferable specific example of a learning service providing apparatus will be described.

### Explanation of terms

Before giving a description of the embodiments, terms to be used in this specification will be explained.

A "learning service" is a service for performing machine learning on the behalf of a requester. Specifically, the learning service is a service for performing the machine learning for adding a new ability to a target apparatus on the behalf of a requester based on a request from the requester (person who desires to add a new ability to a target apparatus), and for providing an "ability" obtained as a result of the machine learning to the target apparatus of the requester. "Learning service providing system" is a system that carries out a series of processing relating to the learning service including accepting (receiving) a learning request from a requester, performing the machine learning, providing a learning result to the requester, and the like.

"Machine learning" is a learning process in which, when an objective is input to a machine, the machine acquires an ability to achieve the objective, and the machine itself can exert the acquired new ability. In this specification, "learning" means machine learning unless specifically stated otherwise.

"Ability" is a function that an apparatus can provide, or processing that the apparatus can execute. Adding a new ability to an apparatus means adding a new function or processing to the apparatus, or improving performance of the function or processing that the apparatus already has. Note that the "target apparatus" of a requester may be any type of apparatus as long as the apparatus is configured such that a new ability can be incorporated. For example, the present invention can be used for developing apparatuses in various fields such as a manufacturing apparatus, an FA robot, an inspection apparatus, a production management system, a plant management system, a monitoring system, a building management system, a store management system, a humanoid robot, a disaster prevention robot, a Web service, a mobile terminal, a household electric appliance, a business system, an embedded system, a biological information system, an image recognition apparatus, a voice recognition apparatus, an autonomous driving system, a fault prediction system, a data analysis apparatus, a content generation apparatus, a security system, a financial system, and a virus monitoring apparatus.

"Ability providing data" is data for adding an "ability" that has been obtained as a learning result to a target apparatus of a requester. The ability providing data is data that has a data format that can be incorporated (implemented, embedded) into the target apparatus of the requester as is. As a result of digitalize the learning result in a suitable format, the learning result obtained by the learning service can be easily incorporated into the target apparatus of the requester.

In the embodiments described below, in order to distinguish between a program in an executable form and a definition of a program, the definition of a program is referred to as a "model". A "model" expresses generalized and abstracted behaviors or properties of the target using a predetermined descriptive language, and is the same as a model used in a model-based development. Any program or data structure can be defined using a model. Also, any apparatus, environment, physical phenomenon, and the like can also be defined using a model. In a model-based development, the internal configuration of each constituent element and the relationship between the constituent elements can be defined by models, and a state in which a plurality of models are combined can be simulated. Also, a program in an executable form or a circuit can be automatically generated from models by using model-based development tools.

The model can include not only the definition of a program, but also a program in an executable form. With this, the processing to be performed when requested learning is executed by a learning simulator can be reduced.

As a result of developing programs using model-based development tools, in the embodiments described below, the relationship between parts in the learning simulation can be clearly defined. However, equivalent programs can also be developed without using model-based development tools to implement a system. Accordingly, the present invention is not limited to a system developed using model-based technology.

Some of the items to be described in a model can be "parameterized". That is, the value of an item is defined using a parameter (variable), and a requester can be prompted to input or select the value of a parameter when a learning request is accepted (received), or the value of a parameter can be appropriately set on a system side when learning is executed. Hereinafter, items that are parameterized are referred to as "parametric items", "undefined items", or simply "parameters", and items whose value or content is defined are referred to as "constant items" or "defined items". Parametric items are not limited to data items. For example, a processing item (method item) can be parameterized by using a functional programming language, for example. In a functional programming language, a function can be passed as the parameter of a function. With this function, a predetermined program can be handled as a parameter of another program, and can be started. As a result of designating ID information of a different function (program) as a parameter of a function, the processes that can be selected can be parameterized. Although this increases the amount of code, similar processes can thus be written using a general object-oriented language or the C language.

A "learning model" is a model in which a method of acquiring a new ability to be added to a target apparatus using machine learning is formulated. A learning model is created for each type of machine learning with respect to which the present system can accept a request. In the following description, there may be contexts in which the term "learning model" is used to mean a "type of machine learning".

A "target apparatus model" is a model of a target apparatus (apparatus to which a new ability is to be added) of a requester. The present system generates and outputs ability providing data that allows execution of the target apparatus model.

A "target model" is a model of a target to which the target apparatus (apparatus to which a new ability is to be added) of a requester is related. Targets to which the target apparatus is related include an environment around the target apparatus, other apparatuses to/from which the target apparatus outputs/receives data, and targets that the target apparatus influences, for example.

### Operational concept of overall system

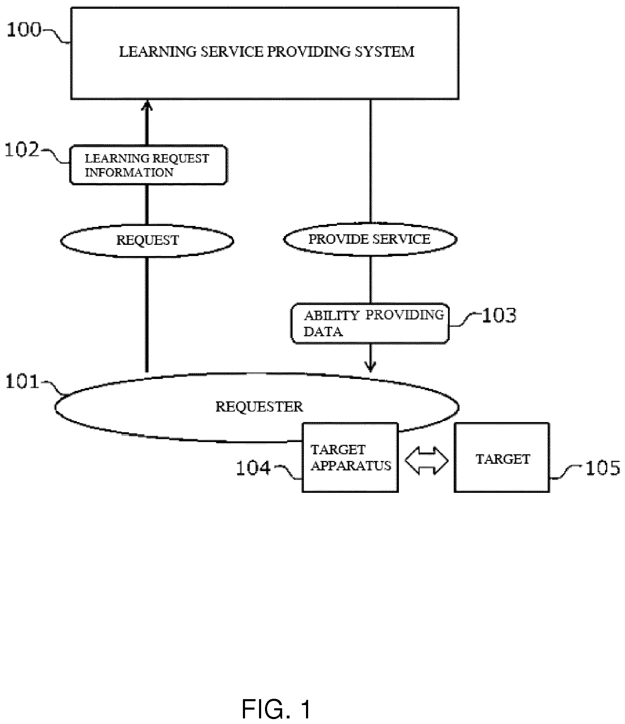

FIG. 1 illustrates a conceptual diagram of a learning service provided by a learning service providing system of the present embodiment. A requester 101 accesses a learning service providing system 100 via a network such as the Internet, and requests the learning service providing system 100 to perform machine learning with respect to an ability to be added to a target apparatus 104. The information necessary for performing the machine learning is provided from the requester 101 to the learning service providing system 100 as learning request information 102. The learning service providing system 100 performs the necessary machine learning based on the learning request information 102 provided from the requester 101 while simulating the target apparatus 104 and the target 105 on the side of the requester 101. The learning service providing system 100, upon completing the learning requested from the requester 101, provides the new ability acquired as a learning result to the requester 101 as ability providing data 103 in a data format that can be incorporated in the target apparatus 104. Note that the requester 101 may access the learning service providing system 100 using a personal computer, or the target apparatus 104 may directly access the learning service providing system 100 if the target apparatus 104 can access the Internet.

### System configuration

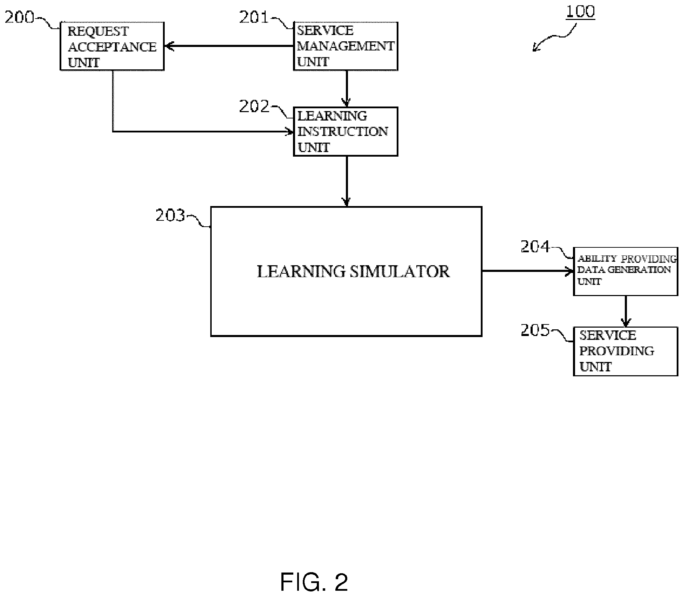

A system configuration diagram of a learning service providing system is shown in FIG. 2. The learning service providing system 100 includes a request acceptance unit 200, a service management unit 201, a learning instruction unit 202, a learning simulator 203, an ability providing data generation unit 204, and a service providing unit 205.

The present system 100 can be configured by a general purpose computer including hardware resources such as a processor, a memory, a storage apparatus (hard disk, semiconductor disk, etc.), an input apparatus (keyboard, mouse, touch panel, etc.), a display apparatus, and a communication apparatus, for example. Functions of the present system 100 shown in FIG. 2 can be realized by a program stored in the storage apparatus being loaded to the memory, and being executed by the processor. Note that the present system 100 may be constituted by one computer, or may be constituted by a plurality of computers that perform computing in a distributed manner. Also, in order to increase speed in processing, some of or all of the functions of the present system 100 can be implemented by dedicated hardware (such as a GPU, FPGA, or ASIC, for example).

### Service management unit 201

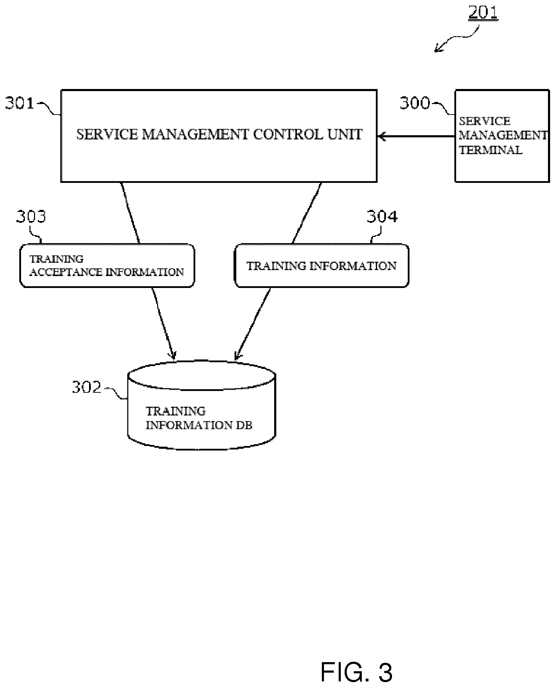

A configuration of a service management unit 201 is shown in FIG. 3. The service management unit 201 includes a service management terminal 300, a service management control unit 301, and a training information DB (database) 302. The service management unit 201 manages a plurality of learning models that the present system 100 can accept.

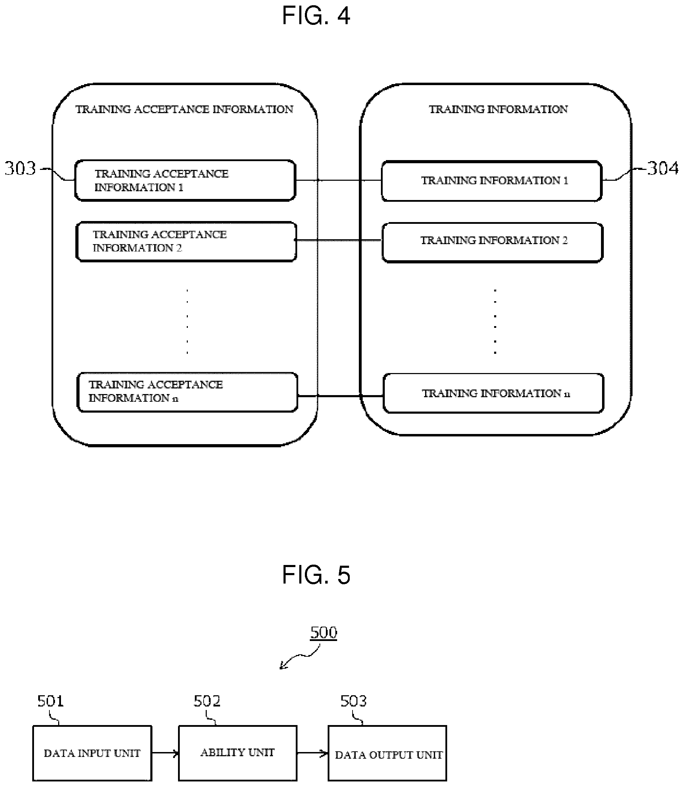

An AI engineer who is a person on an administrator (service provider) side of the present system 100 creates a pair of training acceptance information 303 and training information 304 for each learning model using a service management terminal 300. The created training acceptance information 303 and training information 304 are registered in a training information DB 302 by the service management control unit 301. With this, a learning model that can be selected by the requester 101 when performing a request is added to a learning menu. FIG. 4 shows an example of data registered in the training information DB 302. The training acceptance information 303 is associated with the training information 304 in one-to-one correspondence, and is registered in the training information DB 302 for each learning model.

It is preferable that the learning menu to be displayed to the requester 101 is devised such that also persons who are not familiar with AI technology can easily make a request. For example, although parameters of the neural network such as the number of layers, a layer structure, an activation function need to be designed when deep learning is used for learning, these parameters may be treated as fixed (already defined in the learning model) such that the requester 101 need not consider these parameters. Also, it is preferable that, when a learning menu is displayed to the requester 101, technical terms are not used as long as possible, and a description that can be easily understood is displayed so as to assist the input.

Types of machine learning that the present system 100 can execute may be prepared as options, and be shown in the learning menu, as follows, for example.
- learning to classify objects using still images
- learning to detect anomaly in sensor data
- learning to estimate motion using moving images
- learning to extract a topic in natural language information
- learning how to operate a plant

Here, the content and purpose of learning may be presented in an easily understandable sentence.

The configuration of the learning menu is not limited to that shown above, and various other methods can be adopted. For example, a higher-order menu may include the types of ability such as "learn to classify", "learn to detect anomalies", and "learn how to drive", for example. In this way, requests can be efficiently classified.

The target apparatus 104 to which a new ability is to be added and the target 105 changes depending on the request. In a process in which a requester 101 sequentially inputs items necessary for the request in a request input screen, the request content is automatically classified, and the information necessary for accepting the request is collected. Accordingly, the request acceptance unit 200 may be configured such that, when accepting a request is completed, one of the learning models is selected so as to handle the request content.

Alternatively, a learning menu may be prepared so as to offer classification by target to which the ability to be acquired is related. The learning menu may include "abilities relating to images", "abilities relating to audio", "abilities relating to natural languages", "abilities relating to system control". In this case, the classification of the ability to be acquired may be designated first, and the input and output may be designated later. The combinations of inputs and outputs may be arranged in a matrix that can be displayed in a table for selection. Alternatively, the information of the matrix may be displayed in a tree for selection. When an option in a higher-order menu is selected, a sub-menu for the selected option may be displayed such that the request can be classified in detail and hierarchically accepted. For example, the menu may be hierarchically configured such that, when "camera image" is selected in the higher-order menu, options of "still image / moving image" are displayed, and when "still image" is selected, options relating to processing content such as "image classification / anomaly detection / object recognition" are displayed.

The following method may be adopted without displaying a learning menu. A description may be created in advance for each learning model. A requester 101 may describe the requested content in a sentence (free text or speech). When it is time to accept the request, the descriptions having a higher degree of similarity to the sentence input by the requester 101 are listed in order according to the degree of similarity such that the requester 101 can select the desired learning model.

Alternatively, a database of the details of the learning menu may be made such that a search can be performed using a field, an objective, or a subject. Alternatively, the requester 101 may be requested to input request information using a character string, or to upload a model described in a model descriptive language. Alternatively, with respect to a request that cannot be automatically accepted, a person in charge is notified of the request such that an operator or an engineer can accept the request. In this case, the operator or engineer will create a learning model with respect to the accepted request. In this way, requests covering a wider range can be dealt with.

### Acquiring ability

In order to provide this learning service to various types of target apparatuses 104, the architecture for incorporating a new ability in a target apparatus 104 needs to be standardized. Therefore, in the present embodiment, a model of the architecture for incorporating a new ability in a target apparatus 104 is made, and the model is referred to as an "ability acquisition model". A target apparatus 104 provides an interface for incorporation in accordance with the ability acquisition model, the learning simulator 203 of the present system 100 performs machine learning so as to acquire an ability that matches the ability acquisition model, and as a result, the ability providing data 103 generated by the present system 100 can be incorporated into the target apparatus 104.

As a result of defining the ability acquisition model, information regarding the architecture that needs to be standardized is digitalized as model data. The information regarding the digitalized ability acquisition model is used to let the learning simulator 203 logically match the target apparatus 104 for each learning model. Digitalizing makes it possible to perform automatic generation and automated testing of programs and circuits using various types of development tools.

If the pre-prepared ability acquisition model prepared does not match the target apparatus 104, the requester 101 may create a new ability acquisition model by changing some of or all of the pre-prepared ability acquisition model. The ability acquisition model is coded using a system modeling language, and is stored in a file. The file is included in the learning request information 102 to be provided to the learning service providing system 100, and as a result, a learning request can be made with respect to any target apparatus 104.

As a result of providing identification information (ability acquisition model ID, ability acquisition model name, for example) to each ability acquisition model in order to mutually distinguish the ability acquisition models, the learning simulator 203 can be logically matched with the target apparatus 104 by specifying the ability acquisition model using the identification information.

As a result of using the ability acquisition model, a requester 101 who requests learning and the person that receives the request can perform respective developments without exchanging more technical information than necessary.

Making the information regarding ability acquisition models open to the public can help the dissemination a product that is the target apparatus 104 matching the specific ability acquisition model that has been made open. Also, learning models matching a specific ability acquisition model that has been made open can be provided by a plurality of vendors, and it can be expected that there will be an improvement in the learning level due to competition.

A configuration of the ability acquisition model is shown in FIG. 5. An ability acquisition model 500 of the present embodiment includes three definitions, namely an ability unit 502, which exhibits an ability, a data input unit 501, which is an input interface of the ability unit 502, and a data output unit 503, which is an output interface of the ability unit 502. The data input unit 501 receives data conforming to a predetermined specification from a target apparatus 104 or other devices, performs necessary data processing thereon, converts the data format of the processed data so as to be compatible with the ability unit 502, and inputs the converted data to the ability unit 502. The data input unit 501 includes a definition of a specification according to which the target apparatus 104 and other devices input data into the ability unit 502, which is a specification of data to be received from the target apparatus 104 or the like, a specification of data processing, a specification of data to be input to the ability unit 502, or the like. The ability unit 502 performs information processing based on data input from the data input unit 501, and outputs the result to the data output unit 503. As a result of changing the internal configuration of the ability unit 502, the ability of the ability acquisition model 500 can be changed. The data output unit 503 receives the result from the ability unit 502, performs the necessary data processing, converts the data format of the processed data so as to be compatible with the target apparatus 104 and the other devices, and outputs the converted data. The data output unit 503 includes a definition of a specification according to which the ability unit 502 outputs data to the target apparatus 104 or the other devices, which is a specification of data to be output from the ability unit 502, a specification of data processing, a specification of data to be output to the target apparatus 104 or the like in a predetermined interface specification, or the like.

As a result of using the ability acquisition model 500, it is ensured that the data input units 501, the ability units 502, and the data output units 503 in the learning simulator 203 and the target apparatus 104 respectively perform logically the same operations even if they are implemented differently. Also, as a result of using the ability acquisition model, learning can be requested without exchanging more information than necessary between the learning requester and a person who receives the request.

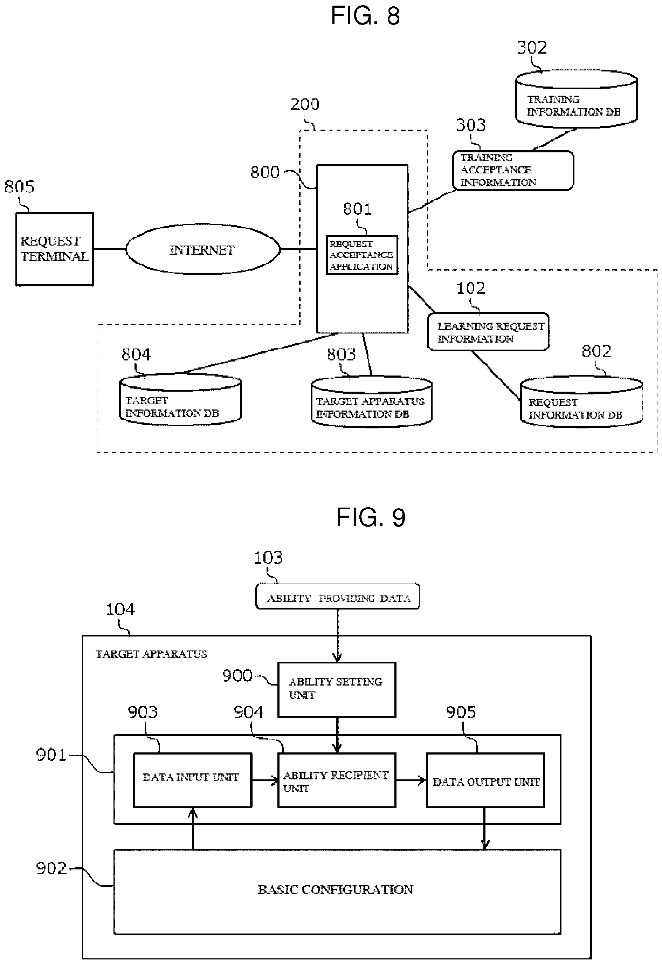

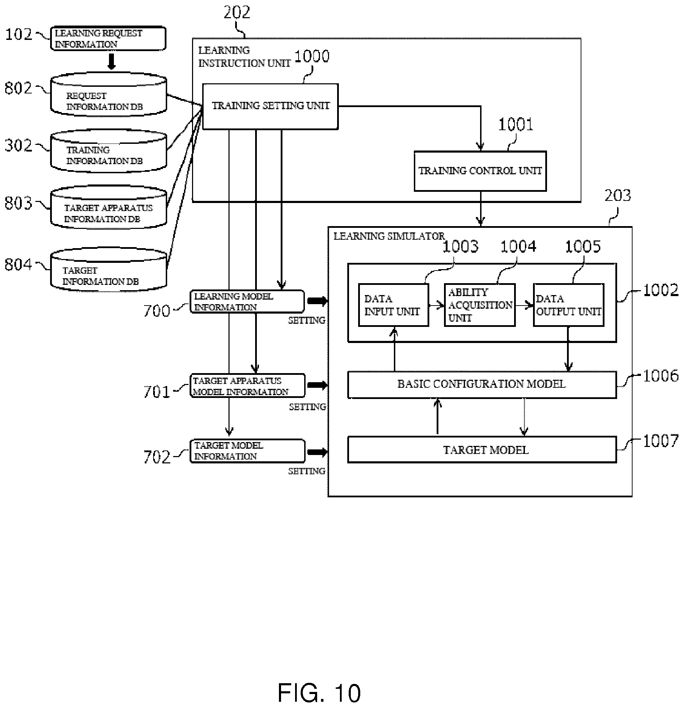

Note that, because the ability acquisition model 500 is used in learning simulation for acquiring a new ability on the learning simulator 203 side of the present system 100, the ability unit 502 on the system 100 side is also referred to as an "ability acquisition unit" (see ability acquisition unit 1004 in FIG. 10), in the following description. On the other hand, because the ability acquisition model 500 is used for receiving and executing a new ability acquired by the system 100 on the target apparatus 104 side, the ability unit 502 on the target apparatus 104 side is also referred to as an "ability recipient unit" (see ability recipient unit 904 in FIG. 9). Also, in order to distinguish between an ability acquisition model on the learning simulator 203 side and an ability acquisition model on the target apparatus 104 side, the reference numerals shown in FIGS. 9 and 10 are used in the following description.

In order to add an ability acquired in the learning simulator 203 to the target apparatus 104, the ability acquisition model 500 may at least include the specification of an interface between the data input unit 501 and the ability unit 502, the specification of an interface between the ability unit 502 and the data output unit 503, and information for specifying the configuration of the ability recipient unit 904 of the target apparatus 104 when the learning model is used in learning. For example, if the ability to be acquired is "image classification", the relationship between the target apparatus 104 and the ability acquisition model is simple, and therefore the learning simulator 203 can be made compatible with the target apparatus 104 without other information. Specifically, it only needs to be defined that the input is image data, and the output is a classification result.

The ability acquisition model 500 may further include the following detailed information.

The data to be input to the ability acquisition unit 1004 implemented in the learning simulator 203 needs to be equivalent to the data to be input to the ability recipient unit 904 of the target apparatus 104. The data input unit 501 of the ability acquisition model 500 can include information for defining the interface specification relating to inputting data to the data input unit 903 from the basic configuration 902 of the target apparatus 104. The data input unit 501 can incorporate any logic.

If deep learning is used for learning, because the ability recipient unit 904 is the deep neural network that is also used in the learning model, so that the ability acquisition model 500 needs to include information for specifying the configuration of a network that can receive the ability. The information for specifying the configuration may be information for uniquely determining the network that can receive the ability, or may be information for indicating a plurality of selectable ranges. In the case of other learning methods, information for specifying a learning logic such as a circuit or a software for acquiring an ability is included. Accordingly, the logical configuration of the ability acquisition unit 1004 of the learning simulator 203 can match that of the ability recipient unit 904 of the target apparatus 104. Meanwhile, the method of implementing the ability acquisition unit 1004 of the learning simulator 203 may be different from that of the ability recipient unit 904 of the target apparatus 104. That is, one may be a hardware implementation, and the other may be a software implementation, for example. For example, when the ability recipient unit 904 of the target apparatus 104 is implemented by software, the neural network of the ability acquisition unit 1004 can be configured by hardware on the learning simulator 203 side, in order to shorten a learning time.

The data output from the ability acquisition unit 1004 implemented in the learning simulator 203 via the data output unit 1005 needs to be equivalent to the data output from the ability recipient unit 904 in the target apparatus 104 via the data output unit 905. Therefore, the data output unit 503 of the ability acquisition model 500 can include information for defining the interface specification of data output from the data output unit 905 to the basic configuration 902 of the target apparatus 104.

As a result of defining the input/output interface specification between the ability acquisition model 500 and the basic configuration 902 of the target apparatus 104, simulation using a model 1006 of the basic configuration 902 can be performed in the learning simulator 203. If the acquired ability controls the basic configuration 902 of the target apparatus 104, for example, detailed information as described above is required.

The ability acquisition model 500 may include circuit information or a program in an executable form, serving as an implementation of the learning simulator 203 in the target apparatus 104. Conversely, a minimum interface specification may also be defined. As a result of defining the minimum interface specification, the size of a file in which the ability acquisition model 500 is defined can be reduced. A configuration may also be adopted in which the interface specification and the definition of a logic to be implemented are included, and the logic is automatically generated from a model for each of the learning simulator 203 and the target apparatus 104. As a result of performing automatic generation, the efficiency of developing the learning model can be improved, and the specification can be strictly checked automatically using model information.

The ability acquisition model 500 needs only be defined so as to not include any contradiction between the learning simulator 203 and the target apparatus 104 in any of the learning models. The implementation of the portion corresponding to the ability acquisition model 500 may be different between the learning simulator 203 and the target apparatus 104.

The ability acquisition model 500 can be defined by an abstract class of an object-oriented programming language or a functional programming language, or a language function corresponding to a class that defines an interface, for example. Furthermore, implementation classes can be added. Alternatively, the ability acquisition model 500 can be defined using a system modeling language as an interface specification. The ability acquisition model 500 may be defined using the system modeling language so as to include a logic to be implemented. Alternatively, the ability acquisition model 500 can be defined as an interface specification of a hardware descriptive language. The ability acquisition model 500 may be defined using the hardware descriptive language so as to include a logic to be implemented.

Each model may define only the interface specification, or may include the definition of a logic to be implemented corresponding to each of the data input unit 501, the ability unit 502, and the data output unit 503.

The data input unit 1003 and data output unit 1005 in the learning simulator 203 output or receive data, which is equivalent to the data that the data input unit 903 and data output unit 905 in the target apparatus 104 output or receive, to or from the ability acquisition unit 1004 as learning data. It is sufficient that data equivalent to data in the target apparatus 104 is input to the ability acquisition unit 1004, and therefore, the data input unit 1003 and data output unit 1005 in the learning simulator 203 need not be configured similarly to the data input unit 903 and data output unit 905 in the target apparatus 104. If the format of data used for learning or the format of output data is different from the format of data used inside the target apparatus 104, the data needs only be converted such that the interface between the data input unit 1003 and the ability acquisition unit 1004 matches the interface between the data output unit 1005 and the ability acquisition unit 1004 in the learning simulator 203. As a result of making the ability acquisition model consistent between the learning simulator 203 and the target apparatus 104, it is ensured that the ability acquisition unit 1004 when learning is performed and the ability recipient unit 904 in the target apparatus 104 execute the same abilities, and output and receive equivalent data. Also, a new ability can be easily incorporated to the target apparatus 104 using the ability providing data 103. If the ability acquisition models are consistent, then even in a case where the ability acquisition unit 1004 of the learning simulator 203 and the ability recipient unit 904 of the target apparatus 104 are implemented in different modes (hardware implementation and software implementation, or programming languages are different, for example), the ability can be imparted using the ability providing data 103.

The ability (program, various parameters, or the like for realizing information processing) to be exerted by the ability unit 502 is generated by machine learning. The machine learning can be performed using deep learning (a method for performing machine learning using deep learning is mainly assumed in the following embodiments). Note that the learning method is not limited to deep learning.

For example, to learn motor control, a new ability can be acquired using the following method. Constituent elements of a plurality of control logics are prepared in advance. Some of the constituent elements are randomly selected by training, and are connected. In a model in which the selected constituent elements are connected, the result is optimized using a genetic algorithm. The above operations are repeated in a predetermined range, and the most favorable one is selected.

For example, to learning the classification of character strings, a new ability can be acquired using the following method. A large quantity of samples classified by a person are prepared. Various types of char string functions are prepared. Char string functions are randomly selected, and a plurality of the selected char string functions are combined. Parameters of the char string functions are optimized using a genetic algorithm. The above operations are repeated in a predetermined range, and the most favorable one is selected.

A new ability can be acquired, for example, by randomly generating a machine code of a program for each part, and selecting the machine codes with which the output with respect to the input is the best. As a result of appropriately selecting the division of a program for each objective, learning speed can be increased.

An AI engineer selects an efficient ability acquisition model and its training method, for each request to be accepted, so as to accept the learning request. Various methods are known as learning methods in deep learning. The AI engineer selects a method, for each target to which the method is applied, with which learning is completed with less processing.

### Example of deep learning

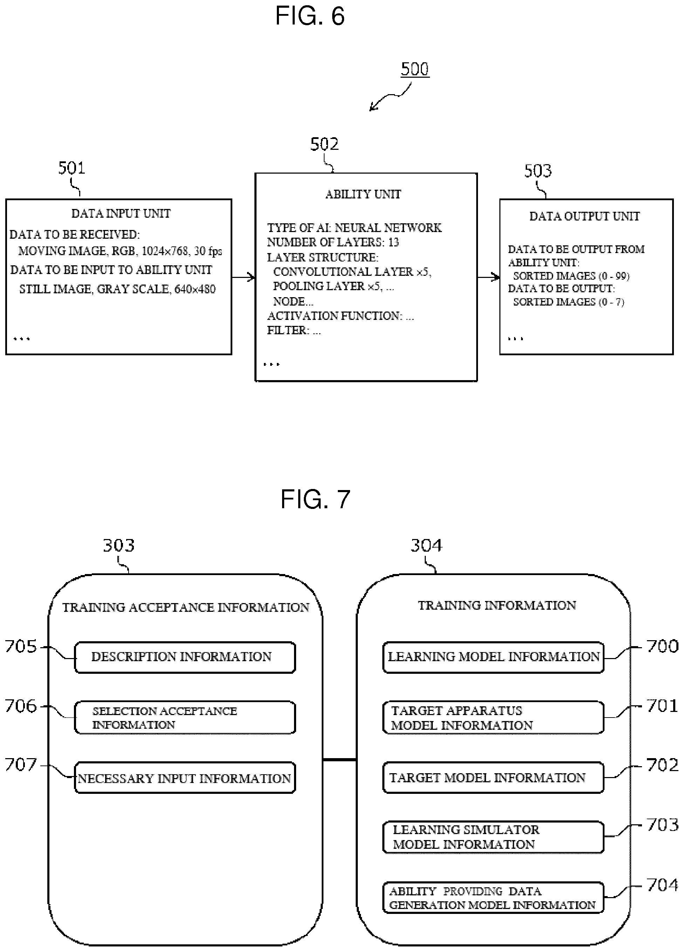

An example of the ability acquisition model using deep learning is shown in FIG. 6. A data input unit 501 is a functional block that converts the format of a signal input to the target apparatus 104 so as to be compatible with a neural network, and inputs a digitalized signal. In the data input unit 501, "moving image, RGB, resolution 1024×768, 30 fps" are defined as the specification of data to be received from the target apparatus 104, "still image, gray scale, resolution 640×480" are defined as the specification of data to be input to the ability unit 502. If color information is not necessary, converting a color image to a gray scale image can reduce the learning time and simplify the circuit configuration of the ability unit 502. This is an example of a case where the data format is converted, and when color information is necessary, the configuration may be such that a RGB color signal is input without conversion. The ability unit 502 is a functional block that outputs a target result from input data using a neural network that has been trained using deep learning. The model of the ability unit 502 is a subset of a neural network in which all outputs and inputs of any number of layers having any size are connected. Additional circuits such as a feedback circuit, an arithmetic circuit, a logic circuit, a memory circuit, a synchronous circuit, a delay circuit, and a reset circuit can be added to the model of the ability unit 502, as necessary. The ability unit 502 includes definitions of the type of AI, the number of layers, the structure of each layer, an activation function, a weight filter, and the like. When learning is performed, in a configuration defined by the learning model, neural networks are successively configured, and parameters are optimized. The data output unit 503 is a functional block that converts and outputs the output of the neural network to information that can be used by the target apparatus 104 or another device. In the data output unit 503, a specification of the data that is to be output from the ability unit 502, a specification of the data that is obtained by converting the data output from the ability unit 502 so as to have a data format required by the target apparatus 104, and is ultimately output, and the like are defined.

### Training information 304

An example of the data structure of training information is shown in FIG. 7. The training information 304 is for defining the information necessary for performing machine learning, and includes learning model information 700, target apparatus model information 701, target model information 702, learning simulator model information 703, and ability providing data generation model information 704. Hereinafter, the information 700 to 704 will be described.

### (1) Learning model information 700

The learning model information 700 is information regarding a learning model. The learning model is a model in which a method of acquiring a new ability to be added to a target apparatus 104 using machine learning is formulated. The learning model is created for each target apparatus 104 to be handled and for each target 105. Note that the same learning model can also be applied to apparatuses 104 and targets 105 whose behaviors are similar. The information regarding the target apparatuses 104 and targets 105 that can be handled by the learning model can be described in the corresponding training acceptance information 303.

The learning model may include the following information.

"Learning objective": Some of or all of the items that constitute the learning objective are parameterized, and can be defined as items with which conditions of the learning objective can be designated. The items of the learning objective may be any items including the accuracy or error of an output result of the ability unit 502, the evaluation result using an evaluation formula, the number of repetitive calculations in learning, the stability of the output, and the like.

"Definition relating to input to ability unit": This defines how the data to be input to the ability unit 502 is input from the target apparatus 104 or another external device. For example, if two types of sensor data are input from the target apparatus 104, and average data thereof is given to the ability unit 502, then the specification of the two types of sensor data, the processing method for obtaining the average data, specification of data to be given to the ability unit, and the like are defined. The data to be handled may include various types of data such as images, voice data, natural languages, and sensor data, for example. Different models are defined for different data types or specifications.

"Definition regarding configuration of ability unit": This defines internal configuration of the ability unit 502. For example, if a neural network of deep learning is used, the number of layers, the structure of each layer (convolutional layer, a pooling layer, a fully connected layer, and a node), the activation function, the filter, and the like are defined. A plurality of configurations that can be handled may be defined (range of the number of layers, variations of layer structure, for example), and one of the configurations can be selected.

"Definition regarding output of the ability unit": This defines the format of information regarding the data output from the ability unit 502 is to be output to the target apparatus 104 or another external device. For example, if the ability unit 502 outputs to the target apparatus 104, when outputting a predicted probability (actual value), a binary determination result indicating whether or not the probability is larger than a threshold value, the specification of predicted probability data, the specification of determination result data, the threshold value specification, and the like are defined.

"Method of training ability unit": This defines a method used to perform machine learning on the ability unit 502, specifically, a training program for performing the machine learning. If an AI engineer creates the training program in advance, training can be automatically executed when a request has been made. For example, a training program for deep learning is created while designating the input/output configuration of the neural network, the configuration of each layer of the neural network, learning data, and the like. The training program for deep learning is for acquiring a new ability by successively inputting learning data, and optimizing the parameters of the respective layers of the neural network. The training program can be defined as a model as well. As a result of parameterizing items that can be selected in the training, many variations can be handled with a small number of models. In the present embodiment, the training program is defined as a model for each learning model displayed to the requester 101.

The learning model described above can be described using a model descriptive language. In the case of describing a learning model using a model descriptive language, the learning model that has been described using the model descriptive language can be automatically converted to a program that can be executed by a simulator. The learning model may be described using a program that can be executed by a simulator without using the model descriptive language.

Any method that enables model-based description can be applied to the learning model. For example, some programs have been provided that support AI technology including deep learning. The learning model can be constructed using such programs. A more advanced, high speed model may also be created. As a result of including information regarding the learning model in the training information, a new ability can be acquired by a learning simulator.

The learning service providing system 100 performs learning simulation, for each learning model, using a common architecture defined by each ability acquisition model 500, and as a result, can incorporate the ability acquired by learning to the target apparatus 104 using the ability providing data 103.

### (2) Target apparatus model information 701

The target apparatus model information 701 is information regarding a model of the target apparatus 104. As a result of using the target apparatus model, the system 100 can simulate the operations and input/output of the target apparatus 104 by using a computer simulation, without using the target apparatus 104 (real machine) of a requester 101.

The target apparatus model may include the following information.

"Configuration of ability unit (ability recipient unit)": This is information defining a hardware configuration of the ability recipient unit 904 included in the target apparatus 104. For example, the model of an FPGA (Field-Programmable Gate Array) may be designated, or the number of gates may be designated. Alternatively, when implemented by software, the model of a CPU (Central Processing Unit) or a GPU (Graphics Processing Unit), and the memory capacity that can be used in addition may be designated. In the case of using a cloud service, the type of cloud, the type of CPU, the number of CPUs, the number of clocks, and the memory capacity to be used may be designated. In addition to these examples, the circuit configuration may be defined in any way.

"Interface specification of ability acquisition model": This defines the connection method between the data input unit 903, the ability recipient unit 904, and the data output unit 905 included in the target apparatus 104. For example, in the case of an FPGA, definitions regarding signals of input/output terminals are included. In the case of software implementation, definition of a software interface of the ability recipient unit 904 is included. In the case of using a cloud service, definition of the communication method for using the ability is included. Any interface that can be defined as a model can be used as the interface of the ability acquisition model.

The data input unit 903, the ability recipient unit 904, and the data output unit 905 of the target apparatus 104 may each be implemented by hardware or software. The data input unit 903, the ability recipient unit 904, and the data output unit 905 of the target apparatus 104 are respectively configured according to the specifications respectively defined for the data input unit 501, the ability unit 502, and the data output unit 503 of the ability acquisition model 500.

In each learning model, the interface specifications need to be matched between the ability acquisition model 901 of the target apparatus 104 and the ability acquisition model 1002 of the learning simulator 203. The interface specifications of the data input unit 501, the ability unit 502, and the data output unit 503 that are defined in the ability acquisition model 500 of the learning model are defined so as to be respectively matched with those of the data input unit 903, the ability recipient unit 904, and the data output unit 905 of the target apparatus 104. As a result of matching the ability acquisition models, the ability acquired by the learning simulator 203 can be converted to the ability providing data 103 and incorporated into the target apparatus 104.

"Model of basic configuration of apparatus": This is information for defining a basic configuration 902 (constituent portion other than the configurations corresponding to the ability acquisition model 500) originally included in the target apparatus 104. A configuration 901 corresponding to the ability acquisition model 500 requires the specification of the basic configuration 902 of the target apparatus 104, when performing the learning simulation, in order to receive/output signals and data from/to the basic configuration 902 of the target apparatus 104. The model of the basic configuration includes a definition of the interface between the basic configuration 902 of the target apparatus 104 and a new ability to be realized by the ability acquisition model 901, for example. Specifically, the model of the basic configuration includes a definition of an input signal to be input from the basic configuration 902 to the data input unit 903, a definition of an output signal to be output from the data output unit 905 to the basic configuration 902, a definition regarding how the signals are handled in the target apparatus 104, and the like.

The target apparatus model need only describe the interface of the target apparatus 104. The target apparatus model can be generated from information acquired from the requester 101 and the DB before starting training.

### (3) Target model information 702

The target model information 702 is information regarding a model of the target 105 that is related to the target apparatus 104. As a result of using the target model, a simulation can be performed in which a target 105 (another apparatus, environment, or a user outside the target apparatus 104, for example) that may influence the target apparatus 104 is taken into consideration.

An example of the target model information 702 will be shown in the following.

In the case of a Web service, the target model can be modeled as a browser that supports HTML5, for example. Furthermore, a model that simulates a user may be added.

In the case of a car race game, models of a rule of the game, specification and performance of vehicles used for racing, a course specification, and physical phenomena are created. In the case of controlling some apparatus, system, or plant, the model of a control target apparatus is the target model information 702. Furthermore, if a model of the outside environment with which the target apparatus 104 or the control target apparatus interacts is created using a physical model or the like, simulation can be performed so as to include the outside environment.

The target model need only describe the interface between the target 105 and the target apparatus 104. The target model can be generated based on information that can be acquired from the requester 101 or the DB before starting training.

### (4) Learning simulator model information 703

The learning simulator model is a model that defines the configuration of a simulator used for learning in the present system 100. In the present embodiment, the learning simulator is configured by combining the learning model, the target apparatus model, and the target model (details will be described later).

### (5) Ability providing data generation model information 704

The ability providing data generation model is a model that defines the method for generating the "ability providing data" 103 to be incorporated in a circuit of the target apparatus 104 based on the result of learning performed in the present system 100, and the like. Specifically, a conversion program for converting the learning result to the ability providing data 103 may be prepared as the ability providing data generation model.

For example, if an FPGA is used for implementation, the FPGA may be configured to realize a neurocircuit, an input interface circuit, or the output interface circuit. In the case of implementation by software, software that emulates the neurocircuit, and a program for setting the parameters obtained as the learning result may be prepared. A configuration may be adopted in which the circuit for implementing the acquired ability is realized as a component using the ability providing data 103, and the component is physically inserted into a receiving slot of the target apparatus 104.

The information included in the above-described training information 304 includes constant items whose values are defined in advance by an AI engineer, and parametric items whose values are not defined. With respect to the parametric items, the requester 101 is asked to input information when a learning request is accepted. It is preferable that the number of parametric items is as small as possible, in order to reduce the inputting burden on the requester 101, and simplify the learning request. Accordingly, the learning simulator model information 703 and the ability providing data generation model information 704 may be defined in advance, for example. Also, it is preferable that, with respect to the learning model information 700, the target apparatus model information 701, and the target model information 702 as well, basic items are defined in advance, and the items that the requester 101 is requested to input are limited to as few items as possible, such as the configuration and input/output of the ability unit 502, and the learning objective.

### Training acceptance information 303

The training acceptance information 303 is information for supporting the requester 101 to input information. Because the necessary information is different for each learning model (training information 304), the training acceptance information 303 is prepared so as to be associated with respective training information 304. As a result of accepting the learning request information 102 while prompting the requester 101 to input items of the training information 304 using the training acceptance information 303, it is ensured that all information necessary for learning is input. Information for supporting the requester 101 to input is defined for each item that requires input from the requester 101, in the training acceptance information 303.

An example of the training acceptance information 303 is shown in FIG. 7. The training acceptance information 303 includes description information 705, selection acceptance information 706, and necessary input information 707. The description information 705 is information for describing the contents of the respective items to the requester 101. The selection acceptance information 706 is information for defining options of the respective items such that the input of each item can be performed by selecting a menu. The necessary input information 707 is information for defining items with respect to which the requester 101 needs to make an input. By using such training acceptance information 303, the requester 101 can be prompted to input the necessary information.

### Request acceptance unit 200

The configuration of the request acceptance unit 200 will be described using FIG. 8. The request acceptance unit 200 has a function of accepting the learning request information 102 from a request terminal 805 of the requester 101 via the Internet. The request acceptance unit 200 is constituted by a Web server 800 on which a request acceptance application 801 operates, a request information DB 802, a target apparatus information DB 803, a target information DB 804, and the like.

The request acceptance application 801 is a program for providing functions of displaying an interactive user interface for receiving input of information necessary for the learning request in the request terminal 805, and acquiring information input by the requester 101. The request information DB 802 is a database for storing accepted learning request information 102. The target apparatus information DB 803 is a database for storing information regarding the target apparatus 104 of the requester 101 such as the target apparatus model information 701, and the target information DB 804 is a database for storing information regarding the target 105 such as the target model information 702.

The request acceptance unit 200 displays a learning menu to the requester 101 for allowing the requester 101 to select a desired learning model from a plurality of learning models registered in the training information DB 302. After the desired learning model is designated by the requester 101, the request acceptance unit 200 accepts the information necessary for performing machine learning using the training information 304 and the training acceptance information 303 corresponding to the designated learning model (type of machine learning), and generates the learning request information 102.

Specifically, the request acceptance unit 200 reads out the training acceptance information 303 corresponding to the selected learning model from the training information DB 302, and prompt the requester 101 to input the necessary information based on the training acceptance information 303. For example, the request acceptance unit 200 displays, for the required input items defined in the necessary input information 707, a description defined in the description information 705 and options defined in the selection acceptance information 706 to the requester 101, and prompts the requester 101 to input (select) information. The required input items include a type and specification of input data, a learning objective, a type and specification of output data, information for specifying the target apparatus or the target apparatus model, information for specifying the target or the target model, and the like. By repeating such input processing with respect to all of the required input items, all pieces of necessary information regarding the learning model desired by the requester 101 are input.

The request acceptance unit 200 registers the learning request information 102 to the request information DB 802. The learning request information 102 includes information for specifying the training information 304 corresponding to the selected learning model, information input by the requester 101 (values of parametric items, for example), and the like. The request acceptance unit 200 notifies the learning instruction unit 202 of the completion of registering the learning request information 102.

Note that the request acceptance unit 200 can also receive a request file in which information necessary for learning is described using a system descriptive language or the like from the request terminal 805. For example, if the learning model desired by the requester 101 is not in the learning menu, the requester 101 may create a request file in which the desired learning content is described, and can request learning. When a learning request is accepted using a request file, an AI may engineer create a new learning model based on the request file, and add the learning model to the learning menu.

In the present embodiment, a configuration is adopted in which a learning request is accepted using the training acceptance information 303. Instead of this configuration, a configuration may also be adopted in which a separate request acceptance program for receiving necessary information from the requester 101 is prepared for each learning model, and the learning request is accepted by switching to the request acceptance program corresponding to the learning model selected by the requester 101.

### Target apparatus 104

The requester 101 designates the target apparatus 104 to which the ability is to be imparted, and requests learning. The target apparatus 104 may be any apparatus to which a new ability in accordance with the ability acquisition model 500 can be added. For example, the target apparatus 104 includes an image classification apparatus for classifying still images, a monitoring apparatus that performs monitoring using sensor data, a prediction system for predicting movement of a target using a moving image, a Web service system, a driving apparatus, or the like.

FIG. 9 schematically shows the configuration of the target apparatus. The target apparatus 104 roughly includes an ability setting unit 900, a configuration 901 corresponding to the ability acquisition model 500, and a basic configuration 902 originally included in the target apparatus 104. The configuration 901 corresponding to the ability acquisition model 500 is constituted by a data input unit 903, an ability recipient unit 904, and a data output unit 905. The ability setting unit 900 has a function of setting the configuration 901 corresponding to the ability acquisition model 500 using the ability providing data 103 provided from the present system 100 such that the ability recipient unit 904 can exhibit the new ability.

The configuration 901 corresponding to the ability acquisition model 500 is configured by hardware whose function can be changed. For example, a configuration may be adopted in which the program of an FPGA can be re-written. Alternatively, a configuration may be adopted in which the program to be executed by a processor such as a CPU or a GPU can be changed, or the parameters to be used in the program can be changed. For example, as a result of changing the parameters of a program for emulating a neural network, the function of the neural network can be changed. Alternatively, the configuration may be such that the function is changed by replacing some of the components or an apparatus to be connected.

The ability providing data 103 includes "ability setting data", "input setting data", and "output setting data", for example. The ability setting data is data for setting a function of executing a new ability acquired by learning (ability of image classification by a neural network, for example) to the ability recipient unit 904. The input setting data is data for setting a function regarding the interface of inputting data to the ability recipient unit 904, to the data input unit 903. The function regarding the interface of inputting data includes a function of incorporating necessary data from the basic configuration 902 of the target apparatus 104 to the data input unit 903, a function of incorporating necessary data from a device (sensor, for example) other than the target apparatus 104 to the data input unit 903, a function of performing necessary processing (averaging, integration, sampling, noise removal, feature amount extraction, binarization, color conversion, resolution conversion, or the like, for example) on incorporated data, a function of converting the data format so as to be compatible with the ability recipient unit 904, or the like, for example. Also, the output setting data is data for setting a function regarding the interface of outputting data from the ability recipient unit 904, to the data output unit 905. The function regarding the interface of outputting data includes a function of performing necessary processing (averaging, integration, sampling, noise removal, feature amount extraction, binarization, color conversion, resolution conversion, or the like, for example) on data that is output from the ability recipient unit 904, a function of converting the data format so as to be compatible with the basic configuration 902 of the target apparatus 104, or the like, for example. The ability setting data, the input setting data, and the output setting data may each be a program as such, parameters used in a program, or both of a program and parameters. As a result of the ability setting unit 900 performing setting of the configuration 901 corresponding to the ability acquisition model 500 using various types of setting data given by the ability providing data 103, the data input unit 903, the ability recipient unit 904, and the data output unit 905 can execute information processing corresponding to the new ability.

The data input unit 903 in which settings have been performed acquires data from the basic configuration 902 of the target apparatus 104, performs necessary processing, converts the data format so as to be compatible with the ability recipient unit 904, and inputs the converted data to the ability recipient unit 904. Camera data, sensor data, and event data may be input as the input data, for example. In natural language processing, a large number of text files may be input as the input data.

The data output unit 905 in which settings have been performed performs necessary processing on data output from the ability recipient unit 904, converts the data format so as to be compatible with the basic configuration 902 of the target apparatus 104, and outputs the converted data to the basic configuration 902. For example, an output from the neural network incorporated in the ability recipient unit 904 may be input to the data output unit 905, and the data output unit 905 may output data to the basic configuration 902.

The ability recipient unit 904 will be described in detail using a specific example. The ability recipient unit 904 configures a neural network based on the ability providing data 103 input from the outside, for example, and as a result, receives the new ability. The ability recipient unit 904 and the ability providing data 103 can be realized as follows, for example.
- Re-writable FPGA. In this case, data on the circuit and the parameters of the neural network to be written into the FPGA are the ability providing data, for example.
- The ability is implemented as a program of a CPU. In this case, a CPU program in an executable form for computing operations of the neural network circuit is the ability providing data, for example.
- The ability is implemented as a program of a GPU. In this case, a GPU program in an executable form for computing operations of the neural network circuit is the ability providing data, for example.
- The ability is added as a component. In this case, a re-writable FPGA into which the neural network is written is the component including the ability providing data, for example.
- The ability is used as a cloud service. In this case, an application program of a network service in which any of the above items is incorporated is the ability providing data.
- An ability that an apparatus other than the target apparatus externally provides is used. In this case, a program for using the apparatus in which any of the above items is incorporated is the ability providing data.
- The ability is added as an apparatus. In this case, a program for using the apparatus in which any of the above items is incorporated is the ability providing data, for example.

### Target apparatus model

Regardless of the type of the target apparatus 104, the model of the target apparatus 104 can be obtained by combining the configuration 901 corresponding to the ability acquisition model 500, and the basic configuration 902 originally included in the target apparatus 104, as shown in FIG. 9. As a result of combining the basic configuration model corresponding to the basic configuration 902 and the ability acquisition model 500, a model of the target apparatus 104 after acquiring the new ability is obtained. As a result of using this target apparatus model, and the target model that is a model of the target 105 external to the target apparatus 104, the operations of the target apparatus 104 can be simulated on a computer. The basic configuration model is not necessarily a model of all the configurations of the target apparatus 104. It is sufficient that at least a configuration of a portion that mutually interacts with the ability acquisition model 500 is defined by the basic configuration model.

A configuration in which the target apparatus 104 includes one ability acquisition model is shown in this example, but a configuration may also be adopted in which a plurality of ability acquisition models are included. As a result of including the plurality of ability acquisition models, a plurality of abilities can be acquired. In the above-described example, an example is shown in which the target apparatus 104 and the learning service providing system 100 are implemented as different apparatuses, but the target apparatus 104 can also be configured to include some of or all of the learning service providing system 100. Accordingly, the target apparatus 104 may be a product including a self-learning ability. For example, a humanoid robot including a learning ability according to the present invention performs learning upon receiving a learning request from a person, and can give the ability providing data to another robot having the same configuration of the humanoid robot.

The service of the present system 100 can be applied to the target apparatus 104 of any type if the target apparatus model and the target model are provided. Note that these models may be created and provided by the requester 101 him/herself, or may be created and provided by a person other than the requester 101. For example, a supplier who provides a component or product to the requester 101 may provide the models, or a service provider of the present system 100 may provide the models. Also, when the target apparatus model and the target model are already registered in the target apparatus information DB 803 and the target information DB 804 of the present system 100, the requester 101 can use the models registered in these databases as well. In this case, when the learning request is accepted, the requester 101 may be prompted to input information for specifying the target apparatus 104 (such as the type of the apparatus) or information for specifying the target apparatus model (such as model ID). The same applies to the target model.

### Learning simulator 203

Detailed configurations of the learning instruction unit 202 and the learning simulator 203 are shown in FIG. 10.

The learning simulator 203 performs machine learning of the new ability to be added to the target apparatus 104 while simulating operations of the target apparatus 104 using the basic configuration model 1006, the ability acquisition model 1002, and the target model 1007 of the target apparatus 104. The ability acquisition model 1002 includes the data input unit 1003, the ability unit (ability acquisition unit) 1004, and the data output unit 1005.

The ability acquisition unit 1004 simulates a portion that executes the ability that is to be incorporated into the target apparatus 104 of the requester 101. When performing learning, the circuit configuration of the ability acquisition unit 1004 can be appropriately changed. The ability acquisition unit 1004 can be realized using a neural network for deep learning, for example. The number of layers and the configuration of each layer of the neural network are set based on the learning model information 700.

The data input unit 1003 simulates operations of receiving data from the outside of the ability acquisition model 1002, performing necessary processing on the received data, and thereafter inputting processed data to the ability acquisition unit 1004. The data input unit 1003 can receive data from the basic configuration 902 of the target apparatus 104, and also can receive data from the outside of the target apparatus 104. As the modes for receiving data from the outside of the target apparatus 104, a mode in which sensor data is acquired from a sensor connected to the target apparatus 104, a mode in which data is acquired from a database, a mode in which a data stream is received via a network, and the like are envisioned.

The data output unit 1005 simulates operations of receiving data from the ability acquisition unit 1004, performing necessary processing on the received data, and thereafter inputting processed data to the outside of the ability acquisition model 1002. The data output unit 1005 converts the data format of the output of the neural network of the ability acquisition unit 1004 to the data format required by the basic configuration 902 of the target apparatus 104 or an apparatus outside the target apparatus 104.

The basic configuration model 1006 simulates the operations of the basic configuration 902 of the target apparatus 104. If the ability acquisition unit 1004 mutually interacts with the basic configuration 902 of the target apparatus 104, the data input unit 1003 acquires the necessary data from the basic configuration model 1006, and the data output unit 1005 transfers the output of the ability acquisition unit 1004 to the basic configuration model 1006.

The target model 1007 simulates the target 105 external to the target apparatus 104. For example, the target model 1007 simulates another apparatus that is to be connected to the target apparatus 104, the environment (including physical phenomenon) around the target apparatus 104, tools handled by the target apparatus 104, an object that is produced or processed by the target apparatus 104, an operator who operates the target apparatus 104, and the like.

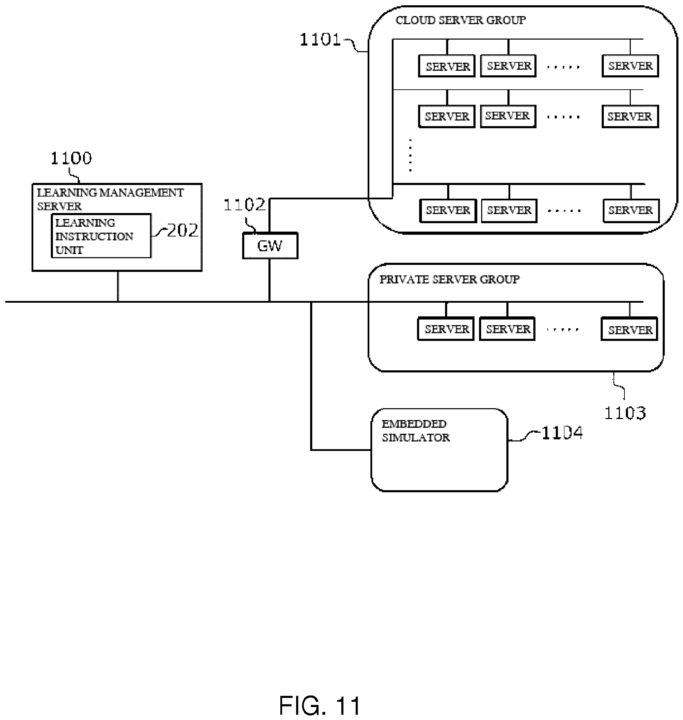

An exemplary configuration of the learning simulator 203 is shown in FIG. 11. Because the learning simulator 203 requires a large amount of computational resources, a learning management server 1100 in which the learning instruction unit 202 is implemented and the hardware resources in which the learning simulator 203 is implemented are separately provided in the example in FIG. 11.

For example, the learning simulator 203 can be configured by a cloud server group 1101 installed on the Internet. In this case, the learning instruction unit 202 transmits the necessary setting information and the processing tasks to each of the cloud servers via a gateway 1102, causes the cloud servers to execute learning simulation, and receives the results. Alternatively, the learning simulator 203 may be configured by a private server group 1103 on a local area network. In the case of using the server groups 1101 and 1103, parts of the simulation processing of the ability acquisition model 1002, the basic configuration model 1006, and the target model 1007 may be executed by separate servers. Furthermore, parts of simulation processing of the models 1002, 1006, and 1007 may be processed by a plurality of servers in a distributed manner. With this, the speed of the simulation can be increased.

In order to increase the speed of simulation processing, a dedicated system such as an embedded simulator 1104 may also be used. The configuration may also be such that a part of software processing is replaced by hardware. An optimum apparatus can be selected to perform a simulation for each learning model, the apparatuses including a configuration for handling requests including a large amount of data, a configuration in which a large number of layers are included, or a configuration for when real time learning is required.

The speed of simulation can be increased by a method in which distributed processing performed by a plurality of CPUs is used, a method in which a high speed computation apparatus called a GPU is used, or the like. Also, as a result of configuring a neurocircuit using an FPGA or the like, parallel operation can be performed, and the speed of simulation can be increased. Such a method for increasing the speed of simulation can be included in the learning simulator model.

A configuration can also be adopted in which a simulator is connected to a real machine (the target apparatus 104 of the requester 101). For example, the target apparatus 104 of the requester 101 may be connected to a simulator (computer that executes a simulator). Alternatively, the simulation can be executed on a circuit (CPU, GPU, FPGA, etc.) included in the target apparatus 104 of the requester 101. As a result of adopting an IoT technology, big data can be handled in a real time manner. By using this technology, various types of data regarding the target apparatus 104 of the requester 101 are sent to the simulator in real time via the Internet, and the simulation can be performed using this data. Alternatively, the simulator may include a function corresponding to the model of the target apparatus 104.

An apparatus that provides service may be used as the simulator. For example, in the case of a Web service provided by natural language processing, both of the Web service and the learning service can be performed using a server resource on the cloud.

### Learning instruction unit 202

The learning instruction unit 202 is a processing unit that carries out settings and control of a training, and includes a training setting unit 1000 and a training control unit 1001, as shown in FIG. 10. The training setting unit 1000 performs the settings necessary for the training on the learning simulator 203 based on the learning request information 102 accepted from the requester 101 and the corresponding training information 304. The training control unit 1001 performs training by controlling the learning simulator 203, and develops (generates by learning) an ability to be added to the target apparatus 104.

Specifically, the training setting unit 1000 sets, based on the learning model information 700, the learning objective, the specification of input/output data and processing content of the data input unit 1003 and the data output unit 1005, the internal configuration of the ability acquisition unit 1004, the training program, and the like. Also, the training setting unit 1000 sets, based on the target apparatus model information 701, the basic configuration model 1006 of the target apparatus 104, parameters regarding inputting to and outputting from the ability acquisition model 1002, and the like, and furthermore, sets the target model 1007 based on the target model information 702.

### Ability providing data generation unit 204

The ability providing data generation unit 204 converts the learning result (ability acquired by training) of the learning simulator 203 to data (ability providing data 103) to be incorporated into the ability recipient unit 904 of the target apparatus 104. The conversion program for generating the ability providing data 103 from the learning result is given by the ability providing data generation model information 704 in advance. Using this conversion program, ability providing data 103 (program or a parameter used in the program, for example) that is compatible with the hardware configuration (circuit configuration such as FPGA, CPU, or GPU, for example) of the target apparatus 104 is generated. The ability providing data 103 may include the ability setting data, the input setting data, and the output setting data, as described above.

### Service providing unit 205

The service providing unit 205 provides the ability providing data 103 generated by the ability providing data generation unit 204 to the requester 101. Any method can be adopted as the providing method. For example, the service providing unit 205 may transmit the ability providing data 103 to the requester 101 using an electronic means (e-mail, FTP, or download from a file server, for example). Also, the service providing unit 205 may record the ability providing data 103 to a recording medium such as a DVD-ROM, and sends the recording medium to the requester 101. Also, the service providing unit 205 may directly transmit the ability providing data 103 to the target apparatus 104 of the requester 101 via a network. The ability providing data 103 may be provided as a program that can be executed in the target apparatus 104, or may be provided as a program to be executed on the cloud or a service provided by the cloud. Also, the ability providing data 103 may be provided in form of an IoT service in which a plurality of apparatuses are combined. Also, the ability providing data 103 may be incorporated into a semiconductor component, or may be implemented as a component that can be incorporated into the target apparatus 104. Alternatively, a serviceperson may visit the requester 101, and implement the ability providing data 103 into the target apparatus 104. Also, the target apparatus 104 may be received from the requester 101, and returned after the ability providing data 103 is incorporated therein.

### System operations

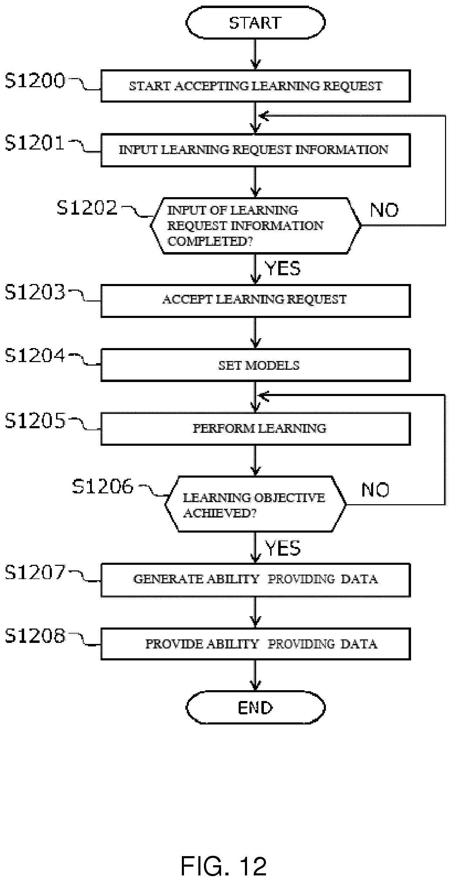

Processing flow from accepting a learning request to providing the ability providing data in the learning service providing system 100 is shown in FIG. 12.

When the requester 101 accesses the present system 100 via the Internet and applies a new learning request, the request acceptance unit 200 starts accepting the learning request (step S1200). The request acceptance unit 200 displays a request input screen in a terminal 805 of the requester 101, and makes the requester 101 input a desired learning model and information necessary for learning (step S1201). Here, as a result of prompting the requester 101 to input information according to the training acceptance information 303, the information necessary for learning can be fully input. After the input of the learning request information is complete (YES in step S1202), the request acceptance unit 200 registers the learning request information 102 into the request information DB 802, and notifies the learning instruction unit 202 of the fact that a new learning request has been accepted (step S1203).

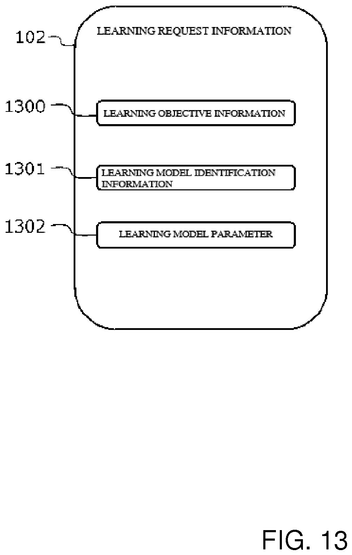

An example of the data structure of the learning request information 102 is shown in FIG. 13. The learning request information 102 includes learning objective information 1300, learning model identification information 1301, and learning model parameters 1302. The learning objective information 1300 includes information regarding the learning objective designated by the requester 101. The learning model identification information 1301 includes information (ID of the training information 304 in the training information DB 302 or the like) for specifying the training information 304 corresponding to the learning model designated by the requester 101. The learning model parameter 1302 includes information input by the requester 101 with respect to parametric items of the learning model.

Next, the learning instruction unit 202 sets the learning model, the target apparatus model, the target model, and the like to the learning simulator 203 according to the learning request information 102 (step S1204), and performs training by controlling the learning simulator 203 (step S1205). For example, in the case of a neural network for deep learning, an output is evaluated by changing the parameters step by step for each of the plurality of layers, and the parameters are optimized such that the degree of matching between the output and the learning objective increases. If the degree of matching with respect to the learning objective satisfies a pre-set completion condition (YES in step S1206), the learning instruction unit 202 ends the training.

Next, the ability providing data generation unit 204 generates the ability providing data 103 (step S2107) based on the learning result (ability acquired by training) of the learning simulator 203. Finally, the service providing unit 205 provides the ability providing data 103 to the requester 101 (step S1208).

### Example of request input screen

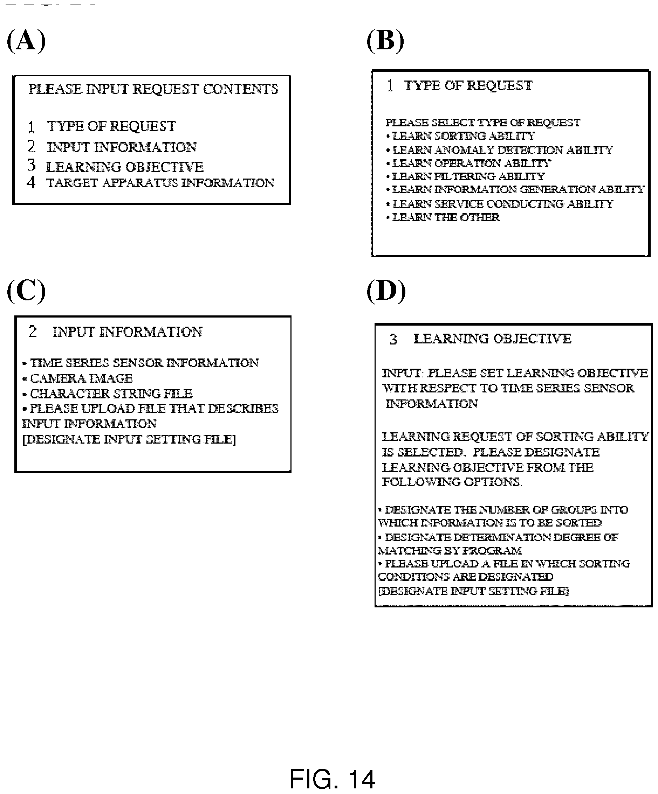

An example of the request input screen is shown in FIGS. 14A to 14C, FIGS. 15A to 15E, and FIGS. 16A and 16B.

FIG. 14A is a screen for displaying a list of items to be input when a request is performed. In this example, inputs are requested with respect to four items, namely "1 type of request", "2 input information", "3 learning objective", and "4 target apparatus information". FIG. 14B shows a screen displayed when "1 type of request" is selected in FIG. 14A, the screen being for designating the type of request. FIG. 14C shows a screen for designating the type of input information. The options for the input information are appropriately set according to the type of request designated in FIG. 14B. The example in FIG. 14C is a screen for designating input information that is displayed after "learn classification ability" is selected. In this example, one of "time series sensor information", "camera image", "character string file", and "upload of a file that describes input information" can be selected. FIG. 14D shows a screen for designating the learning objective that is displayed after "time series sensor information" is selected in FIG. 14C. In this example, as the method for designating the learning objective with respect to the ability of classifying the time series sensor information, one of "designate the number of groups into which information is to be classified", "designate determination degree of matching by program", and "upload a file in which classification conditions are designated" can be selected.

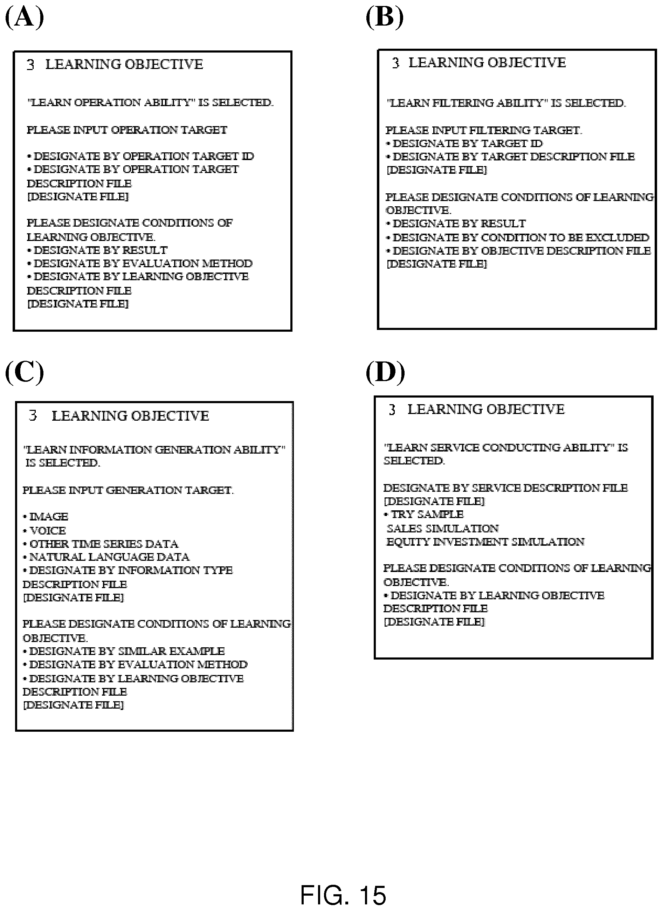

FIG. 15A is an example of the screen for designating the learning objective when "learn operation ability" is selected in FIG. 14B. The method of designating the operation target and the method of designating the learning objective are required to be designated. Similarly, FIG. 15B is an example of the screen for designating the learning objective when "learn filtering ability" is selected in FIG. 14B, FIG. 15C is an example of the screen for designating the learning objective when "learn information generation ability" is selected in FIG. 14B, and FIG. 15D is an example of the screen for designating the learning objective when "learn service conducting ability" is selected in FIG. 14B.

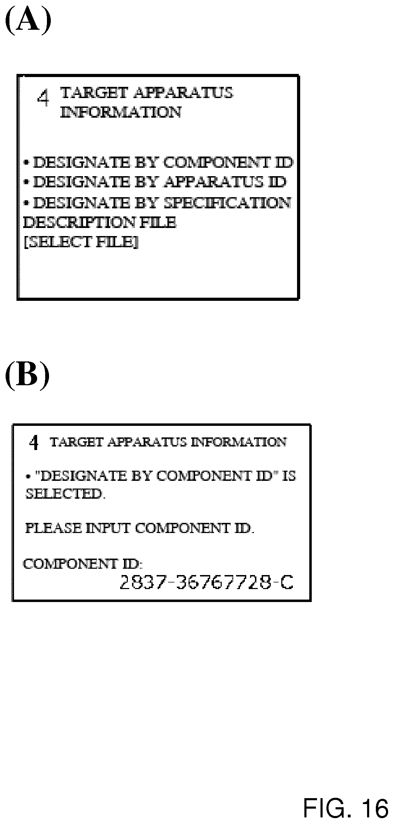

FIG. 16A is an example of the screen for inputting the target apparatus information. In the screen for inputting the target apparatus information, information necessary for creating or designating the target apparatus model and the target model is input. In this example one of "designate by component ID", "designate by apparatus ID", and "designate by specification description file" can be selected. FIG. 16B is an example of the screen for designating a component ID that is displayed after "designate by component ID" is selected in FIG. 16A. For example, if the ability recipient unit 904 of the target apparatus 104 is configured by an FPGA, the type of FPGA may be designated as the component ID. Alternatively, the type or the like of the target apparatus 104 may be designated as the apparatus ID, or a file including model information of the target apparatus 104 may be designated as the specification description file. Alternatively, a model ID for identifying the target apparatus model registered in the target apparatus information DB 803 may be designated. The same applies to the method of designating the target 105 and the target model.

### Application examples

Specific examples of some learning models will be described in the following.

### (1) Apparatus that handles image

When images are handled in deep learning, the overall configurations of neural networks are similar, although the configuration of each layer may be different. In the case of images, a convolutional neural network (CNN) is used. Heretofore, many studies have been made with respect to the configuration of neural networks, and it is known that there is an appropriate configuration for each target to be handled. Therefore, when accepting a learning request, the accepting may be performed such that an appropriate configuration will be selected according to the type of image, the specification of the image, information to be identified from the image, or the like. Because learning models are different depending on the configuration, the learning model may be created separately in advance.

For example, in the case of a learning model relating to an ability of classifying still images, the following information is included in the learning model.
- Input: type=still image, 1280×1280 pixels, RGB
- Output: result of classifying images (100 classes)
- Leaning data: supervised sample data
- Ability to be acquired: ability of classifying images
- Configuration of ability unit: number of layers = 10, layer structure (convolutional layer, pooling layer), activation function
- Learning objective: identification accuracy rate > 90%
- Training method: training program A
- ...

In the case of a learning model relating to an ability of predicting motion using a moving image, the following information is included in the learning model.
- Input: moving image, 1920×800 pixels, RGB, 60 fps, camera URL
- Output: prediction result of movement for each identification target
- Ability to be acquired: prediction of movement of identification target in moving image
- Configuration of ability unit: number of layers = 13, layer structure (convolutional layer, pooling layer), activation function
- Learning objective: value of evaluation function < 0.1
- Training method: training program B
- ...

### (2) Apparatus that handles voice data

When voice data is handled in deep learning, a recurrent neural network (RNN) that can handle time series data can be used, for example. Abilities relating to a voice data include voice recognition, identification of a speaker, analysis of the attribute of a speaker (estimation of gender, age, nationality, race, or the like), analysis of the emotion of the speaker, a monitoring apparatus using voice data, and the like. For example, if the ability of identifying a speaker is to be learned, voice samples of many speakers that serve as training data and test data are stored in a database, and learning may be performed by deep learning in which the penalty is reduced when matching the training data, and the penalty is increased when not matching the training data.

### (3) Apparatus that handles natural language

As a result of creating a learning model with respect to an apparatus that handles natural language, an ability to be used for a Web service can be acquired. When natural language is handled, data that is encoded into a character string is input. When natural language is handled in deep learning, RNN can be used, for example. Alternatively, Word Vector can be used. A new ability can be acquired by inputting encoded data, and optimizing the output. The ability relating to natural language includes translation of a sentence, generation of a summary, extraction of a topic, classification of sentences, estimation of an author or attributes of an author, prediction of the degree of attention on a sentence, and the like.

### (4) Apparatus that handles sensor data

An ability of performing analysis, feature extraction, change point detection, anomaly detection, prediction, monitoring, or the like based on sensor data can be acquired by learning. For example, in the case of an ability of performing monitoring using a plurality of pieces of sensor data obtained by a sensor group, the input is the plurality of pieces of sensor data, and the output is a monitoring result (presence/absence of an anomaly, type of an anomaly). If the sensor data is time series data, RNN can be used.

### (5) Driving apparatus

In a learning model of a driving apparatus, an output to an actuator is obtained with respect to an input from a sensor. The input from a sensor is input to an ability acquisition model, and the output to an actuator is output from the ability acquisition model. As a result of optimizing the output to the actuator with respect to the input from the sensor, a driving ability can be acquired. In this case, information regarding the driving apparatus is set as the target apparatus model, and information regarding a driving target machine is set as the target model. If only the model is defined, any type of machine can be the driving target machine.

For example, an assembly apparatus, a computer player of a game machine, a vehicle, a plant, a machine tool, a construction apparatus, an agricultural machine, a fishing machine, a computer, and the like are possible examples of the driving target machine. A real driving target machine may be used in the learning simulation.

A learning model for acquiring an ability of a computer player in a car race game will be described as an example of the driving apparatus. For example, the ability can be acquired by DQN (Deep Q Learning) in which deep learning is applied to Q Learning. The ability to be acquired by learning is an ability to operate a steering wheel, an accelerator, and a brake according to the conditions around the player car. The conditions of the player car (position on the course, travelling direction, and speed of the player car, surrounding road conditions, position on the course, travelling direction, and speed of the other car near the player car, and the like) are input to the ability acquisition unit. The ability acquisition unit outputs a steering angle, an accelerator amount, and a brake amount. A physical model of a vehicle that participates in the car race is set as the target apparatus model, and a model of the car race game is set as the target model. The model includes the rules of the game, course information, and a physical model of the course, which is a driving environment of a vehicle. The learning simulation is performed by combining models of vehicles that participate in the car race, and the model of the car race game.

Leaning is performed step by step. At first, using only the player car, learning is performed with respect to driving the player car in a predetermined direction by operating the steering, the accelerator, and the brake. When an ability of driving the player car in the predetermined direction is obtained, learning is performed such that the player car can drive around the course in a shorter period of time. When the player car can drive around the course in a short period of time, learning including a plurality of vehicles of the same type is performed. Furthermore, learning is performed with respect to a plurality of vehicles each having different performance as different players. In the process of above learning, the players in a learned state are classified by acquired scores, and are registered in a database. With this, the level of a computer player can be set. As a result of learning, players of different levels are registered respectively with respect to vehicles each having different performance.

An example of a car race game has been illustrated in this example, but as a result of accurately creating the models of a real car and a road, an ability of driving a real car can also be acquired. As a result of standardizing input and output of the ability acquisition model, an ability of controlling a general purpose controlling apparatus that drives various target apparatuses can be acquired as well.

### (6) Service conducting apparatus

As a result of describing a service as a model, an ability to conduct a service can be acquired as well. The learning model can be created as a model for optimizing the modeled service. As an ability for conducting a service, abilities relating to optimizing utilization of a budget, optimization of a production plan, optimization of a person reception service and a transportation service, optimization of a health promotion advice service, an investment judgement service, and the like can be acquired.

In the case of a service conducting apparatus, as a result of modeling the service and the target of the service, a new ability can be acquired by learning. A service can be modeled as an apparatus that outputs a service output with respect to a service input. The service input and the service output are respectively an input and an output of the ability acquisition model. For example, in the case of a transportation service, an ability of making a transportation plan can be acquired using pieces of past transportation actual data and surrounding environment information for each data. In this case, the input includes a transportation request, surrounding environment information, and vehicle information. The output is a transportation plan. For example, in the case of person reception service, as a result of modeling the contents in the person reception service, a new ability can be acquired. In this case, the input includes information regarding each service and information obtained from the person being attended. The output is an action to be performed. For example, outputting a character string, a reception using a GUI (graphical user interface), a reception using an avatar, and a reception using humanoid robot are possible.

### Advantages of the present system

Benefits to the requester 101 are as follows. First, when this system 100 is used, the requester 101 need not perform machine learning by him/herself, and therefore the efficiency of development operations for adding a new ability to the target apparatus 104 can be improved. Also, the requester 101 need only provide information necessary for machine learning, and therefore even a person who does not have any knowledge or system relating to machine learning can easily use the present system 100. Also, since the learning result is provided in a form of the ability providing data 103 (data for adding a new ability to the target apparatus 104), the requester 101 can easily add the new ability acquired by machine learning to his/her apparatus 104.

Meanwhile, benefits to the service provider are as follows. Since the information necessary for performing machine learning is provided from the requester 101, it is ensured that the requested machine learning is to be executed. Also, processing such as accepting a request from the requester 101 and performing the machine learning can be automated while minimizing labor. Furthermore, since the learning result is converted to the ability providing data 103, and the ability providing data 103 is provided to the requester 101, processing for providing and implementing the learning result to the target apparatus 104 can be automated while minimizing labor.

Also, in the process of machine learning, as a result of performing simulation using a target apparatus model and a target model, machine learning in which the behavior and influence of the target apparatus 104 and the target 105 are taken into consideration can be performed, even without a real machine of the target apparatus 104. If the real machine of the target apparatus 104 is not required, the execution of the machine learning can be easily realized. Specifically, in the case of a large apparatus or an apparatus in operation such as a production facility, it is not realistic to use a real machine for machine learning. The present learning service can be used even in such a case, and is superior in the freedom in application and user-friendliness.

Also, as a result of using an interactive user interface of the request acceptance unit 200, the requester 101 can easily make a request of learning an ability that is desired to be added to the apparatus 104 of the requester 101 to a service provider. Also, there is a benefit to the service provider that full information necessary for performing machine learning can be acquired.

Also, in the present system 100, some items of the training information 304 are parametric items with respect to which the requester 101 is asked to input information, and as a result, machine learning as desired by the requester 101 can be performed. Here, by limiting the parametric items to some items of the training information 304, the burden on the requester 101 when performing input is reduced, and as a result, both the ease of performing the learning request and the customizability of learning can be improved. Furthermore, as a result of the requester 101 being made to input information in a form of selecting from options, the burden on the requester 101 when performing input is reduced.

Note that the configuration of the above-described embodiment merely shows a specific example of the present invention, and is not intended to limit the scope of the present invention. The present invention can take various specific configurations, without departing from the technical concept of the invention. For example, the system configuration, the data structure, the user interface, the parameters, and the like that have been shown in the above-described embodiment are merely an example, and can be changed as appropriate according to the type of machine learning, the objective of learning, the ability desired to be acquired, the configuration of the target apparatus, and the like.
Note 1
   A learning service providing apparatus, including at least one memory and at least one hardware processor that is connected to the memory,
   wherein the hardware processor
   accepts, as learning request information, information necessary for performing machine learning with respect to an ability to be added to a target apparatus, from a requester,
   performs machine learning according to the learning request information accepted from the requester,
   generates, based on a learning result obtained by the machine learning, ability providing data, which is data for adding a new ability acquired as the learning result to the target apparatus, and
   provides the ability providing data to the requester.
Note 2
   A learning service providing method in which a computer including at least one memory and at least one hardware processor that is connected to the memory executes
   a step of accepting, as learning request information, information necessary for performing machine learning with respect to an ability to be added to a target apparatus, from a requester,
   a step of performing machine learning according to the learning request information accepted from the requester,
   a step of generating, based on a learning result obtained by the machine learning, ability providing data, which is data for adding a new ability acquired as the learning result to the target apparatus, and
   a step of providing the ability providing data to the requester.

## Claims

1. A learning service providing apparatus comprising:
a request acceptance unit configured to accept, as learning request information, information necessary for performing machine learning with respect to an ability to be added to a target apparatus, from a requester;
a learning simulator configured to perform machine learning according to the learning request information accepted from the requester;
an ability providing data generation unit configured to generate, based on a learning result obtained by the learning simulator, ability providing data, which is data for adding a new ability acquired as the learning result to the target apparatus; and
a service providing unit configured to provide the ability providing data to the requester.

2. The learning service providing apparatus according to claim 1,
wherein the target apparatus includes an architecture for incorporating a new ability to the target apparatus, and
the learning simulator is configured to perform the machine learning such that an ability that is compatible with the architecture included in the target apparatus is acquired.

3. The learning service providing apparatus according to claim 2,
wherein the architecture is an architecture that is modeled by an ability acquisition model including an ability unit that executes an ability, a data input unit that is an input interface of the ability unit, and a data output unit that is an output interface of the ability unit; and
the learning simulator is configured to perform the machine learning using an ability acquisition model that is compatible with an ability acquisition model of the target apparatus.

4. The learning service providing apparatus according to any one of claims 1 to 3, wherein the learning simulator is configured to simulate operations of the target apparatus using a target apparatus model, which is a model of the target apparatus, in a process of the machine learning.

5. The learning service providing apparatus according to claim 4, wherein the learning acceptance unit is configured to accept information for specifying the target apparatus or the target apparatus model, from the requester.

6. The learning service providing apparatus according to any one of claims 4 and 5, wherein the learning simulator is configured to simulate operations of the target apparatus further using a target model, which is a model of a target to which the target apparatus is related, in a process of the machine learning.

7. The learning service providing apparatus according to any one of claims 1 to 6, further comprising:
a training information database that stores, in advance, training information which is information necessary for performing machine learning, for each type of machine learning with respect to which a request can be accepted,
wherein the request acceptance unit is configured to let the requester designate the type of machine learning to be requested, and generate the learning request information using the training information corresponding to the designated type of machine learning.

8. The learning service providing apparatus according to claim 7,
wherein some items of the training information are parametric items that are defined by parameters, and
the request acceptance unit is configured to request the requester to input information with respect to the parametric items.

9. The learning service providing apparatus according to claim 7 or 8, further comprising:
an ability acquisition unit for acquiring a new ability by the machine learning,
wherein the training information includes learning model information, which is information regarding a learning model, and
the learning model includes a definition regarding a configuration of the ability acquisition unit, a definition regarding input of the ability acquisition unit, and a definition regarding output of the ability acquisition unit.

10. The learning service providing apparatus according to claim 9,
wherein a new ability to be acquired by the ability acquisition unit is an ability of performing monitoring using a plurality of pieces of sensor data to be obtained from a sensor group,
the definition regarding input of the ability acquisition unit includes a plurality of pieces of sensor data, and
the definition regarding output of the ability acquisition unit includes a monitoring result.

11. The learning service providing apparatus according to claim 10,
wherein a new ability to be acquired by the ability acquisition unit is an ability of classifying images,
the definition regarding input of the ability acquisition unit includes a format of a still image, and
the definition regarding output of the ability acquisition unit includes an image classification result.

12. The learning service providing apparatus according to claim 10,
wherein a new ability to be acquired by the ability acquisition unit is an ability of predicting motion,
the definition regarding input of the ability acquisition unit includes a format of a moving image, and
the definition regarding output of the ability acquisition unit includes a motion prediction result.

13. The learning service providing apparatus according to claim 9,
wherein a new ability to be acquired by the ability acquisition unit is an ability of driving a driving target machine,
the definition regarding input of the ability acquisition unit includes an input from a sensor, and
the definition regarding output of the ability acquisition unit includes an output to an actuator.

14. A learning service providing method comprising:
a step of accepting, as learning request information, information necessary for a computer to perform machine learning with respect to an ability to be added to a target apparatus, from a requester;
a step of the computer performing machine learning according to the learning request information accepted from the requester;
a step of the computer generating, based on a learning result obtained by the machine learning, ability providing data, which is data for adding a new ability acquired as the learning result to the target apparatus, and
a step of the computer providing the ability providing data to the requester.

15. A program for causing a computer to execute the steps of the learning service providing method according to claim 14.
